# EUROPEAN PATENT APPLICATION

(11) **EP 4 738 095 A1**
(43) Date of publication of application: **06.05.2026**
(21) Application number: 24830914.8
(22) Date of filing: 27.06.2024
(51) Int. Cl.: G06F 3/14, G06F 3/147

(54) **DATA PROCESSING METHOD, APPARATUS AND SYSTEM, AND ELECTRONIC DEVICE**

(30) Priority: 30.06.2023 CN 202310801369
(71) Applicant: Vivo Mobile Communication Co., Ltd., Dongguan, Guangdong 523863 (CN)
(72) Inventor: CAO, Kai, Dongguan, Guangdong 523863 (CN)
(74) Representative: Conti, Marco
(86) International application number: PCT/CN2024/102106
(87) International publication number: WO 2025/002282

(57) **Abstract**

This application discloses a data processing method, apparatus, and system, and an electronic device, which relate to the technical field of communication applications. The method of this application includes: receiving a first enabling instruction sent by a system on chip; reducing a resolution of obtained first data according to the first enabling instruction, and processing the first data with a reduced resolution, to obtain second data; and sending the second data to a display driver integrated circuit, where the first data is image data sent by the system on chip; the resolution of the first data is greater than or equal to a first threshold; and a resolution of the second data is less than the first threshold.

## Description

### CROSS-REFERENCE TO RELATED APPLICATIONS

This application claims priority to Chinese Patent Application No. 202310801369.1, entitled "DATA PROCESSING METHOD, APPARATUS, AND SYSTEM, AND ELECTRONIC DEVICE" and filed on June 30, 2023, which is incorporated herein by reference in its entirety.

### TECHNICAL FIELD

This application relates to the technical field of communication applications, and specifically, to a data processing method, apparatus, and system, and an electronic device.

### BACKGROUND

Currently, a discrete display chip performs processing on image data, such as frame interpolation, to support interpolation of a low-frame-rate game/video source into a high frame rate and allow users to obtain a smoother visual experience. In addition, a system on chip (System on Chip, SoC), after being upgraded, can support a scaling function of a display process unit (Display Process Unit, DPU), so as to scale a full high definition (Full High Definition, FHD) game/video source to a wide quad high definition (Wide Quad High Definition, WQHD) resolution, to achieve a clearer display effect.

However, the discrete display chip can only perform processing, such as frame interpolation, on low-resolution image data outputted by the SoC, and cannot be adapted to an upgraded SoC, which reduces display quality.

### SUMMARY

An objective of embodiments of this application is to provide a data processing method, apparatus, and system, and an electronic device, to solve a problem that display quality is affected because an existing discrete display chip is not adapted to an upgraded SoC.

According to a first aspect, an embodiment of this application provides a data processing method, including:
receiving a first enabling instruction sent by a system on chip;
reducing a resolution of obtained first data according to the first enabling instruction, and processing the first data with a reduced resolution, to obtain second data; and
sending the second data to a display driver integrated circuit, where
the first data is image data sent by the system on chip, the resolution of the first data is greater than or equal to a first threshold, and a resolution of the second data is less than the first threshold.

According to a second aspect, an embodiment of this application provides a data processing method, including:
receiving a second enabling instruction sent by a system on chip; and
increasing, according to the second enabling instruction and in a case of obtaining second data sent by a discrete display chip, a resolution of the second data, to obtain third data, where
a resolution of the third data is equal to a resolution of first data, and the first data is image data sent by the system on chip.

According to a third aspect, an embodiment of this application provides a data processing method, including:
sending a second enabling instruction to a display driver integrated circuit; and
sending a first enabling instruction to a discrete display chip after sending the second enabling instruction, where
the first enabling instruction instructs the discrete display chip to reduce a resolution of first data sent by a system on chip and then obtain second data through processing; and the second enabling instruction instructs the display driver integrated circuit to increase a resolution of the second data to obtain third data; and
the resolution of the first data is greater than or equal to a first threshold; the resolution of the second data is less than the first threshold; and a resolution of the third data is equal to the resolution of the first data.

According to a fourth aspect, an embodiment of this application provides a data processing apparatus, including:
a first receiving module, configured to receive a first enabling instruction sent by a system on chip;
a first processing module, configured to reduce a resolution of obtained first data according to the first enabling instruction, and process the first data with a reduced resolution, to obtain second data; and
a first sending module, configured to send the second data to a display driver integrated circuit, where
the first data is image data sent by the system on chip, the resolution of the first data is greater than or equal to a first threshold, and a resolution of the second data is less than the first threshold.

According to a fifth aspect, an embodiment of this application provides a data processing apparatus, including:
a second receiving module, configured to receive a second enabling instruction sent by a system on chip; and
a second processing module, configured to increase, according to the second enabling instruction and in a case of obtaining second data sent by a discrete display chip, a resolution of the second data, to obtain third data, where
a resolution of the third data is equal to a resolution of first data, and the first data is image data sent by the system on chip.

According to a sixth aspect, an embodiment of this application provides a data processing apparatus, including:
a second sending module, configured to send a second enabling instruction to a display driver integrated circuit and send a first enabling instruction to a discrete display chip after sending the second enabling instruction, where
the first enabling instruction instructs the discrete display chip to reduce a resolution of first data sent by a system on chip and then obtain second data through processing; and the second enabling instruction instructs the display driver integrated circuit to increase a resolution of the second data to obtain third data; and
the resolution of the first data is greater than or equal to a first threshold; the resolution of the second data is less than the first threshold; and a resolution of the third data is equal to the resolution of the first data.

According to a seventh aspect, an embodiment of this application provides a data processing system, including a discrete display chip, a display driver integrated circuit, and a system on chip.

The system on chip is configured to: send a second enabling instruction to the display driver integrated circuit and send a first enabling instruction to the discrete display chip after sending the second enabling instruction.

The discrete display chip is configured to: after receiving the first enabling instruction, reduce a resolution of obtained first data according to the first enabling instruction, process the first data with a reduced resolution, to obtain second data, and send the second data to the display driver integrated circuit.

The display driver integrated circuit is configured to: after receiving the second enabling instruction, increase, according to the second enabling instruction and in a case of obtaining the second data sent by the discrete display chip, a resolution of the second data, to obtain third data.

The first data is image data sent by the system on chip, the resolution of the first data is greater than or equal to a first threshold, the resolution of the second data is less than the first threshold, and a resolution of the third data is equal to the resolution of the first data.

According to an eighth aspect, an embodiment of this application provides an electronic device, including the data processing system according to the seventh aspect.

In a ninth aspect, an embodiment of this application provides a readable storage medium. The readable storage medium has a program or instructions stored therein, and the program or the instructions, when executed by a processor, implement the steps of the method according to the first aspect, the second aspect, or the third aspect.

According to a tenth aspect, an embodiment of this application provides a computer program product. The program product is stored in a storage medium, and the program product is executed by at least one processor to implement the method according to the first aspect, the second aspect, or the third aspect.

In the embodiments of this application, after receiving the first enabling instruction, the discrete display chip can reduce, according to the first enabling instruction, the resolution of the first data sent by the SoC and process the first data with the reduced resolution, to obtain the second data; and then send the second data to the display driver integrated circuit. In this way, for the first data that is sent by the SoC and whose resolution is greater than or equal to the first threshold, the resolution of the first data is reduced first, so that the discrete display chip can further implement image processing on image data, compatibility between the SoC and the discrete display chip is ensured, and display quality is improved.

### BRIEF DESCRIPTION OF THE DRAWINGS

FIG. 1 is a first schematic flowchart of a data processing method according to an embodiment of this application;
FIG. 2 is a second schematic flowchart of a data processing method according to an embodiment of this application;
FIG. 3 is a third schematic flowchart of a data processing method according to an embodiment of this application;
FIG. 4 is a first diagram of a structure of a data processing system according to an embodiment of this application;
FIG. 5 is a second diagram of a structure of a data processing system according to an embodiment of this application;
FIG. 6 is a diagram of a module structure corresponding to FIG. 1;
FIG. 7 is a diagram of a module structure corresponding to FIG. 2;
FIG. 8 is a diagram of a module structure corresponding to FIG. 3; and
FIG. 9 is a diagram of a structure of an electronic device according to an embodiment of this application.

### DETAILED DESCRIPTION

The following clearly describes the technical solutions in embodiments of this application with reference to accompanying drawings in the embodiments of this application. Apparently, the described embodiments are some of the embodiments of this application rather than all of the embodiments. All other embodiments obtained by a person of ordinary skill in the art based on the embodiments in this application fall within the protection scope of this application.

The terms "first", "second", and the like in the specification and the claims of this application are used to distinguish between similar objects instead of describing a specific order or sequence. It may be understood that data used in such a way is interchangeable in proper circumstances, so that the embodiments of this application described herein can be implemented in other sequences than the sequence illustrated or described herein, and the objects distinguished through "first", "second", and the like are generally of a same type and a number of the objects is not limited, for example, a first object may be one or more than one. In addition, "and/or" in the specification and the claims represents at least one of connected objects, and the character "/" generally represents an "or" relationship between associated objects.

To enable a person skilled in the art to better understand the embodiments of this application, the following descriptions are first provided.

A discrete display chip (a discrete display chip) is widely applied to personal computers, and as an external dedicated image processing unit, can bring display enhancement effects such as a higher frame rate, and higher resolution, color saturation, and contrast. With the explosive growth of the mobile Internet, demands for game and image gradually extend to mobile intelligent terminals, and discrete display chips are also applied to the mobile intelligent terminals.

A display driving method according to the embodiments of this application is described in detail below with reference to the accompany drawings through specific embodiments and application scenarios thereof.

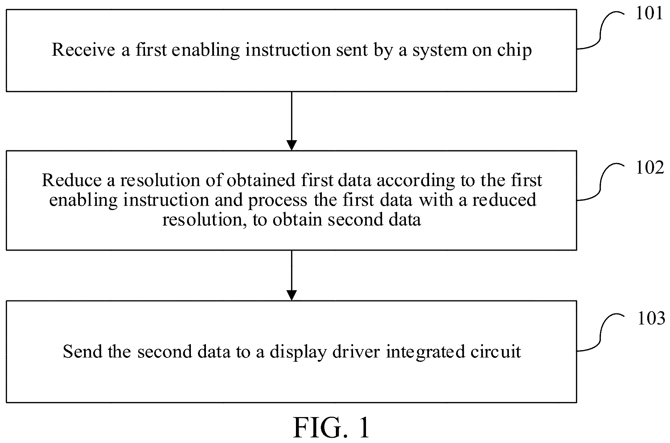

As shown in FIG. 1, an embodiment of this application provides a data processing method, applied to a discrete display chip. The method includes:
Step 101: Receive a first enabling instruction sent by a system on chip.
   Herein, the first enabling instruction is an instruction that is sent by the SoC and that instructs the discrete display chip to reduce a resolution of first data sent by the SoC, and further process the first data with a reduced resolution.
Step 102: Reduce a resolution of obtained first data according to the first enabling instruction, and process the first data with a reduced resolution, to obtain second data.
Step 103: Send the second data to a display driver integrated circuit.

The first data is image data sent by the system on chip, the resolution of the first data is greater than or equal to a first threshold, and a resolution of the second data is less than the first threshold.

In this embodiment, according to step 101 to step 103, after receiving the first enabling instruction, the discrete display chip can reduce, according to the first enabling instruction, the resolution of the first data sent by the SoC and process the first data with the reduced resolution, to obtain the second data, and then send the second data to the display driver integrated circuit. In this way, for the first data that is sent by the SoC and whose resolution is greater than or equal to the first threshold, the resolution of the first data is reduced first, so that the discrete display chip can further implement image processing on image data, compatibility between the SoC and the discrete display chip is ensured, and display quality is improved.

In addition, because the discrete display chip only needs to support image processing of low-resolution image data, costs of the discrete display chip are reduced.

In this embodiment, the first threshold is preconfigured or predefined. In an optional implementation, the first data is wide quad high definition (Wide Quad High Definition, WQHD) data, and the second data is full high definition (Full High Definition, FHD) data.

It should be noted that in this embodiment, the SoC first sends a second enabling instruction to the display driver integrated circuit (Display Driver Integrated Circuit, DDIC), to instruct the DDIC to increase the resolution of the second data to obtain third data after the second data is received; and then sends the first enabling instruction to the discrete display chip, to instruct the discrete display chip to first reduce the resolution of the first data after the first data is received, then process the first data with the reduced resolution to obtain the second data, and send the second data to the DDIC. In this way, the third data obtained by the DDIC is ensured to be restored to an original resolution and is converted into a display panel (panel) driving signal, to complete display driving, and achieve higher-quality display.

Optionally, in this embodiment, reducing the resolution of the obtained first data includes:
downscaling the first data by enabling a downscale component in the discrete display chip.

That is, the discrete display chip is preconfigured with the downscale (Downscale) component, and after receiving the first enabling instruction, the discrete display chip can enable the downscale component, to downscale the received first data, so as to reduce the resolution of the first data.

Optionally, in this embodiment, the first data with the reduced resolution is subjected to at least one of the following processing:
frame interpolation; super-resolution; denoising; color enhancement; and color calibration.

That is, an image processing component, such as a motion estimation and motion compensation (Motion Estimation and Motion Compensation, MEMC) component or a low distortion super resolution (Low Distortion Super Resolution, LDSR) component, may further be deployed on the discrete display chip, to implement one or more of the foregoing processing.

Specifically, a manner of processing the first data with the reduced resolution may be determined with reference to a processing requirement for the first data, and details are not described herein again.

It should be noted that the image processing component of the discrete display chip is disposed after the downscale component.

Optionally, in this embodiment, the method further includes:
communicating an input port of the discrete display chip with a display data receiving component of the discrete display chip after receiving the first enabling instruction, where the display data receiving component is connected to the downscale component; and
sending a first transmission instruction to the system on chip, where the first transmission instruction notifies the system on chip to send the first data.

In this way, by communicating an interface of the discrete display chip with the display data receiving component of the discrete display chip, the discrete display chip can transmit the first data to the downscale component via the display data receiving component. After communicating the input port of the discrete display chip with the display data receiving component of the discrete display chip, the discrete display chip notifies the SoC, through the first transmission instruction, to send the first data, and can enable timely and efficient reduction of the resolution of the received first data for subsequent processing.

Optionally, in this embodiment, the method further includes:
receiving a first disabling instruction sent by the system on chip after receiving the first enabling instruction; and
directly communicating an output port of the discrete display chip with the input port of the discrete display chip according to the first disabling instruction, where
the input port of the discrete display chip is connected to an output port of the system on chip, and the output port of the discrete display chip is connected to an input port of the display driver integrated circuit.

That is, after sending the first enabling instruction, the SoC sends the first disabling instruction to the discrete display chip, to instruct the discrete display chip to directly communicate the output port of the discrete display chip with the input port of the discrete display chip. In this way, in a case of subsequently receiving the first data from the SoC, the discrete display chip outputs the first data directly to the DDIC via an analog bypass (analog bypass) of the discrete display chip instead of through the display data receiving component. In this case, a functional component inside the discrete display chip can be powered down, to reduce power consumption.

Certainly, correspondingly, the SoC may also send a second disabling instruction to the DDIC, to instruct the DDIC to disable an upscale component, and after disabling the upscale component, the DDIC may send a second transmission instruction to the SoC, to notify the SoC to send the first data.

It should be further noted that, in this embodiment, the SoC may determine, based on a requirement for to-be-sent first data, whether to send the first enabling instruction and the second enabling instruction, or to send the first disabling instruction and the second disabling instruction.

In addition, the first enabling instruction and the first disabling instruction may alternatively be understood as a mode switching instruction of the discrete display chip. To be specific, after receiving the first enabling instruction, the discrete display chip operates in a first mode: the input port of the discrete display chip is communicated with the display data receiving component in the discrete display chip, and the downscale component and the image processing component are enabled. After receiving the first disabling instruction, the discrete display chip operates in a second mode: the input port of the discrete display chip is communicated with the output port of the discrete display chip, and the downscale component and the image processing component are disabled. The second enabling instruction and the second disabling instruction may also be understood as a mode switching instruction of the DDIC. To be specific, after receiving the second enabling instruction, the DDIC operates in a first mode: the upscale component is enabled. After receiving the second disabling instruction, the DDIC operates in a second mode: the upscale component is disabled.

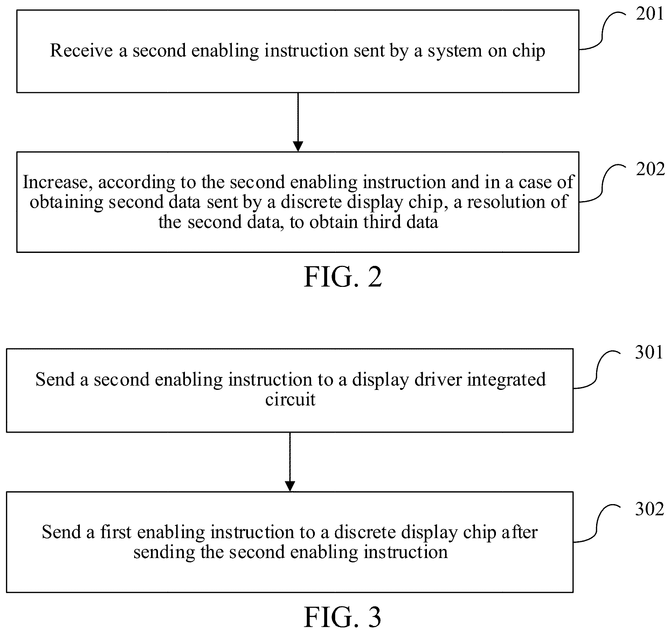

As shown in FIG. 2, an embodiment of this application further provides a data processing method, applied to a display driver integrated circuit. The method includes:
Step 201: Receive a second enabling instruction sent by a system on chip.
   Herein, the second enabling instruction is an instruction that is sent by the SoC and that instructs the DDIC to increase a resolution of second data received from a discrete display chip.
Step 202: Increase, according to the second enabling instruction and in a case of obtaining second data sent by a discrete display chip, a resolution of the second data, to obtain third data.

A resolution of the third data is equal to a resolution of first data, and the first data is image data sent by the system on chip.

In this way, for the second data sent by the discrete display chip, the DDIC can increase the resolution of the second data according to the received second enabling instruction, so that the obtained third data is restored to an original resolution and is converted into a panel driving signal, to complete display driving and achieve higher-quality display.

Optionally, in this embodiment, increasing the resolution of the second data includes:
upscaling the second data by enabling an upscale component in the display driver integrated circuit.

That is, the DDIC is preconfigured with the upscale component. After receiving the second enabling instruction, the DDIC can enable the upscale component, to upscale the received second data, so that the third data is restored to the original resolution.

Optionally, in this embodiment, the method further includes:
receiving a second disabling instruction sent by the system on chip after receiving the second enabling instruction;
disabling an upscale component according to the second disabling instruction, and sending a second transmission instruction, where the second transmission instruction notifies the system on chip to send the first data; and
receiving the first data transmitted by the discrete display chip.

Therefore, after disabling the upscale component according to the second disabling instruction, the DDIC can further notify, by sending the second transmission instruction, the SoC to send the first data. After receiving the first data, the discrete display chip directly outputs the first data to the DDIC via an analog bypass. After receiving the first data, the DDIC completes signal processing and display driving.

In this embodiment, a display data receiving component, a signal processing unit connected to the display data receiving component, and a source driver circuit connected to the signal processing unit are configured in the DDIC. The display data receiving component is configured to receive the first data or the second data sent by the discrete display chip. The signal processing unit includes the upscale component, and the upscale component can upscale the second data when enabled.

As shown in FIG. 3, an embodiment of this application provides a data processing method, applied to a system on chip. The method includes:
Step 301: Send a second enabling instruction to a display driver integrated circuit.
Step 302: Send a first enabling instruction to a discrete display chip after sending the second enabling instruction.

The first enabling instruction instructs the discrete display chip to reduce a resolution of first data sent by the system on chip and then obtain second data through processing; and the second enabling instruction instructs the display driver integrated circuit to increase a resolution of the second data to obtain third data; and
the resolution of the first data is greater than or equal to a first threshold; the resolution of the second data is less than the first threshold; and a resolution of the third data is equal to the resolution of the first data.

In this way, according to the foregoing steps, the SoC first sends the second enabling instruction to the DDIC, to instruct the DDIC, after the second data is received, to increase the resolution of the second data to obtain the third data; and then sends the first enabling instruction to the discrete display chip, to instruct the discrete display chip to first reduce the resolution of the first data after the first data is received, then process the first data with a reduced resolution to obtain the second data, and send the second data to the DDIC. In this way, it is ensured that the third data obtained by the DDIC is restored to an original resolution and converted into a panel driving signal, to complete display driving and achieve higher-quality display.

Optionally, the method further includes:
receiving a first transmission instruction sent by the discrete display chip; and
sending the first data according to the first transmission instruction.

Therefore, the SoC can send the first data to the discrete display chip after the discrete display chip is completely prepared. After the discrete display chip reduces the resolution of the first data, the discrete display chip further processes the first data to obtain the second data, and sends the second data to the DDIC.

Optionally, the method further includes:
receiving a second transmission instruction sent by the DDIC; and
sending the first data according to the second transmission instruction.

Therefore, the SoC can send the first data to the discrete display chip after the DDIC disables an upscale component, and after receiving the first data, the discrete display chip directly outputs the first data to the DDIC via an analog bypass.

Optionally, the method further includes:
sending a first disabling instruction to the discrete display chip.

The first disabling instruction instructs the discrete display chip to directly communicate an output port of the discrete display chip with an input port of the discrete display chip.

That is, the discrete display chip is enabled to directly communicate the output port of the discrete display chip with the input port of the discrete display chip according to the first disabling instruction. In this way, in a case of subsequently receiving the first data from the SoC, the discrete display chip directly outputs the first data to the DDIC via the analog bypass instead of through a display data receiving component.

Optionally, the method further includes:
sending a second disabling instruction to the display driver integrated circuit.

The second disabling instruction instructs the display driver integrated circuit to disable the upscale component.

That is, the DDIC is enabled to disable the upscale component. In this way, after receiving the first data outputted by the discrete display chip, the DDIC does not need to perform upscaling, and directly completes signal processing and display driving.

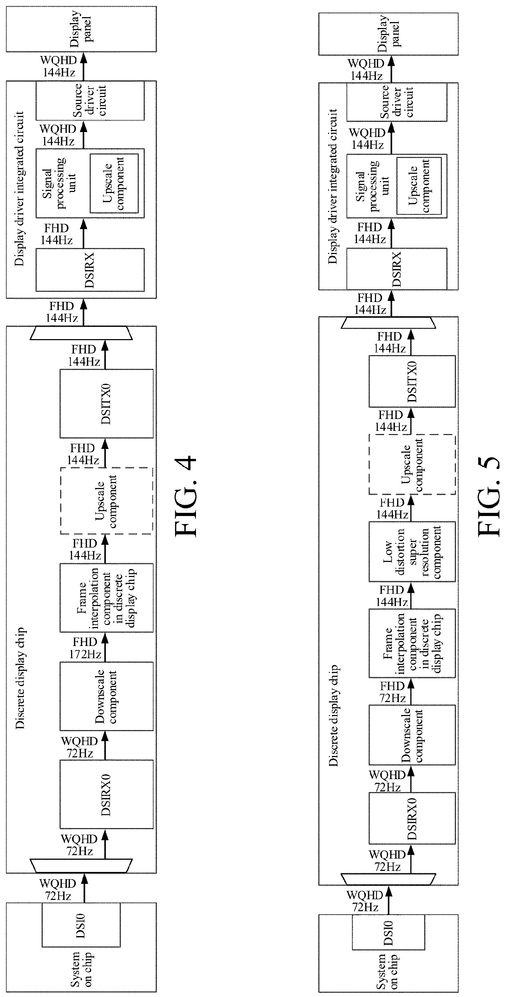

As shown in FIG. 4, an embodiment of this application provides a data processing system, including a discrete display chip, a display driver integrated circuit, and a system on chip.

The system on chip is configured to: send a second enabling instruction to the display driver integrated circuit and send a first enabling instruction to the discrete display chip after sending the second enabling instruction.

The discrete display chip is configured to: after receiving the first enabling instruction, reduce a resolution of obtained first data according to the first enabling instruction, process the first data with a reduced resolution, to obtain second data, and send the second data to the display driver integrated circuit.

The display driver integrated circuit is configured to: after receiving the second enabling instruction, increase, according to the second enabling instruction and in a case of obtaining the second data sent by the discrete display chip, a resolution of the second data, to obtain third data.

The first data is image data sent by the system on chip, the resolution of the first data is greater than or equal to a first threshold, the resolution of the second data is less than the first threshold, and a resolution of the third data is equal to the resolution of the first data.

Therefore, the SoC first sends the second enabling instruction to the DDIC, to instruct the DDIC, after the second data is received, to increase the resolution of the second data to obtain the third data; and then sends the first enabling instruction to the discrete display chip, to instruct the discrete display chip, after the first data is received, to first reduce the resolution of the first data, then process the first data with the reduced resolution to obtain the second data, and send the second data to the DDIC. In a case of obtaining the second data, the DDIC can increase the resolution of the second data to obtain the third data.

In this way, according to the data processing system in the embodiment of this application, for the first data that is sent by the SoC and whose resolution is greater than or equal to the first threshold, the discrete display chip first reduces the resolution of the first data, so that the discrete display chip can further implement image processing on image data, compatibility between the SoC and the discrete display chip is ensured, and display quality is improved. After receiving the second data, the DDIC increases the resolution of the second data, so that the third data is restored to an original resolution and is converted into a panel driving signal, to complete display driving and achieve higher-quality display.

Optionally, as shown in FIG. 4 and FIG. 5, in the data processing system, the SoC includes a display data sending component DSI0, configured to send data to the discrete display chip.

Optionally, as shown in FIG. 4 and FIG. 5, in the data processing system, the discrete display chip includes an input port, a display data receiving component DSI RX0, a downscale component, a frame interpolation component in the discrete display chip (also referred to as a motion estimation and motion compensation component), an upscale component, a display data sending component DSI TX0, and an output port. The input port may be selected to be communicated with DSI RX0 or the output port by using a switch. The output port may be selected to be communicated with the input port or DSI TX0 by using a switch. The upscale component does not operate when the downscale component is enabled. As shown in FIG. 5, the discrete display chip further includes a low distortion super resolution component. Certainly, the discrete display chip may further include another image processing component.

Optionally, as shown in FIG. 4 and FIG. 5, in the data processing system, the DDIC includes a display data receiving component DSI RX, a signal processing unit, and a source driver circuit. The signal processing unit includes an upscale component. The source driver circuit of the DDIC is connected to a display panel.

In addition, in this embodiment,
the display driver integrated circuit is further configured to: disable the upscale component and send a second transmission instruction to the system on chip according to a received second disabling instruction sent by the system on chip. The second transmission instruction notifies the system on chip to send the first data.

The discrete display chip is further configured to: directly communicate the output port of the discrete display chip with the input port of the discrete display chip according to a received first disabling instruction sent by the system on chip, and directly send the first data to the display driver integrated circuit through the output port of the discrete display chip in a case that the input port of the discrete display chip receives the first data.

That is, the SoC sends the first disabling instruction to the discrete display chip, to instruct the discrete display chip to directly communicate the output port of the discrete display chip with the input port of the discrete display chip, and the discrete display chip may further disable a functional component inside the discrete display chip. In a case of subsequently receiving the first data from the SoC, the discrete display chip directly outputs the first data to the DDIC via an analog bypass. The SoC may also send the second disabling instruction to the DDIC, to instruct the DDIC to disable the upscale component.

The SoC may first send the first disabling instruction and then send the second disabling instruction, to avoid a problem that after the upscale component of the DDIC is first disabled, a display abnormality of the second data outputted by the discrete display chip may occur on the display panel. After disabling the upscale component, the DDIC notifies the SoC, through the second transmission instruction, to send the first data, to ensure normal display.

Optionally, the discrete display chip is further configured to: downscale the first data by enabling the downscale component in the discrete display chip.

Optionally, the discrete display chip is further configured to: perform at least one of the following processing on the first data with the reduced resolution:
frame interpolation; super-resolution; denoising; color enhancement; and color calibration.

Optionally, the display driver integrated circuit is further configured to: upscale the second data by enabling the upscale component in the display driver integrated circuit.

In conclusion, in the data processing system of this application, in a case that image data outputted by the SoC needs to be subjected to image processing by the discrete display chip, the SoC first sends the second enabling instruction to the DDIC, and after receiving the second enabling instruction, the DDIC enables the upscale component, and waits for the second data of the discrete display chip. After sending the second enabling instruction, the SoC sends the first enabling instruction to the discrete display chip, and after receiving the first enabling instruction, the discrete display chip enables the downscale component and components related to image processing. Then, the discrete display chip may further send a first transmission instruction to the SoC, to trigger the SoC to send the first data. After receiving the first data, the discrete display chip first reduces the resolution of the first data through downscaling, and then performs image processing, to output the second data. After receiving the second data, the DDIC first restores the third data to the original resolution through upscaling, and then completes display of data.

However, in a case that image data outputted by the SoC does not require image processing by the discrete display chip, the SoC first sends the first disabling instruction to the discrete display chip, and after receiving the first disabling instruction, the discrete display chip communicates the input port of the discrete display chip with the output port of the discrete display chip, and disables the downscale component and the components related to image processing. After sending the first disabling instruction, the SoC sends the second disabling instruction to the DDIC, and after receiving the second disabling instruction, the DDIC disables the upscale component. Then, the DDIC may further send a second transmission instruction to the SoC, to trigger the SoC to send the first data. After receiving the first data, the discrete display chip directly outputs the first data to the DDIC via the analog bypass. After receiving the first data, the DDIC does not need to perform upscaling, and directly completes signal processing and display driving.

Application of the data processing system in the embodiment of this application is described below in a specific scenario by using an example in which the first data outputted by the SoC is image data with a WQHD resolution:

### Scenario 1: Image data with a WQHD resolution needs frame interpolation processing by the discrete display chip

As shown in FIG. 4, before enabling the frame interpolation component in the discrete display chip, the SoC needs to first send an initialization code of a display module and the second enabling instruction (for example, a screen resolution switching command) to the DDIC, and then send the first enabling instruction to the discrete display chip. By enabling a frame interpolation function of the discrete display chip, after downscaling and frame interpolation processing are performed on WQHD 72 Hz image data sent by the SoC inside the discrete display chip, upscaling processing is not performed on the WQHD 72 Hz image data, and FHD 144 Hz image data is directly outputted to the DDIC. The upscale component inside the DDIC increases an image resolution to WQHD.

Specifically, steps of enabling the frame interpolation function of the discrete display chip are as follows:
1) The SoC stops outputting the first data.
2) The SoC outputs an FHD Panel initialization operation code (operation code, OP code for short) and the second enabling instruction to the DDIC, and the DDIC enables the upscale component after receiving the second enabling instruction.
3) The SoC sends the first enabling instruction to the discrete display chip, and the discrete display chip switches from a bypass mode (a second mode) to a frame interpolation mode (a first mode), including the following specific steps:
   i. The discrete display chip is powered on, and DSI RX0, DSI TX0, the frame interpolation component, and the downscale component are initialized.
   ii. The discrete display chip switches an internal switch (mipi switch), to connect a DSI RX0 interface to an SoC DSI0 interface.
   iii. DSI RX0 of the discrete display chip sends the first transmission instruction (for example, a TE signal) to the SoC to notify the SoC to output the first data.
4) After receiving the first transmission instruction, the SoC outputs the WQHD 72 Hz image data to the discrete display chip, and after receiving the WQHD 72 Hz image data, the discrete display chip first processes the WQHD 72 Hz image data through the downscale component to obtain FHD 72 Hz image data, then interpolates the FHD 72 Hz image data through an MEMC component to FHD 144 Hz image data, and finally outputs, without performing processing by using the upscale component, the FHD 144 Hz image data to the DDIC via DSI TX0.
5) After DSI RX of the DDIC receives the FHD 144 Hz image data from the discrete display chip, the upscale component of the signal processing unit processes the FHD 144 Hz image data to obtain WQHD 144 Hz image data, and then converts the WQHD 144 Hz image data into a panel driving signal, to complete display driving.

### Scenario 2: Image data with a WQHD resolution does not require frame interpolation processing by the discrete display chip

As shown in FIG. 4, the SoC in which a frame interpolation function of the discrete display chip is enabled first sends the first disabling instruction to the discrete display chip and then sends the second disabling instruction to the DDIC, to disable the frame interpolation function of the discrete display chip.

Specifically, steps of disabling the frame interpolation function of the discrete display chip are as follows:
1) The SoC stops outputting the first data.
2) The SoC sends the first disabling instruction to the discrete display chip, to switch from a frame interpolation mode to a bypass mode, including the following specific steps:
   i. The discrete display chip stops outputting the first data through DSI TX0, and stops sending a TE signal to the SoC.
   ii. The discrete display chip switches an internal mipi switch, to connect a DSI0 interface of the SoC to a DSI RX interface of the DDIC, that is, the input port of the discrete display chip is communicated with the output port of the discrete display chip, so that subsequently the first data may not pass through a functional component inside the discrete display chip (the discrete display chip enters the bypass mode).
   iii. The discrete display chip disables DSI RX0, DSI TX0, the frame interpolation component, and the upscale component, to complete a power-off procedure.
3) The SoC outputs a WQHD panel OP code and the second disabling instruction (for example, a screen resolution switching (FHD to WQHD) command) to the DDIC, and after receiving the second disabling instruction, the DDIC disables the upscale component and sends the second transmission instruction (for example, a TE signal) to the SoC.
4) The SoC receives the second transmission instruction, and the DSI0 interface outputs the first data to the DDIC, where the first data is determined based on a screen resolution setting and a game/video source frame rate.
5) DSI RX of the DDIC receives the first data from the SoC, to complete signal processing and display driving.

For a discrete display chip that does not support a WQHD 144 Hz output, a 144 Hz frame interpolation function is implemented when a system resolution is set to WQHD.

After receiving the image data with the WQHD resolution, the discrete display chip first performs downscaling to obtain image data with an FHD resolution or a lower resolution and then performs subsequent processing. In this way, a volume of data needing to be processed by the discrete display chip can be reduced, and an output frame rate can be improved. After the discrete display chip outputs the low-resolution and high-frame-rate image data to the DDIC, the DDIC performs upscaling processing. Because the discrete display chip only needs to transmit low-resolution image data, and power consumption of the upscale component of the DDIC is relatively low, in a case that the frame interpolation function is enabled, both power consumption of the discrete display chip and power consumption of an entire computer can be reduced.

### Scenario 3: Image data with a WQHD resolution needs frame interpolation and super-resolution processing by the discrete display chip

As shown in FIG. 5, the low distortion super resolution component is added inside the discrete display chip, and can perform anti-aliasing and sharpening processing on image data, to enhance a definition of the image. Specific steps are the same as those in scenario 1, except that after the frame interpolation component is enabled, the low distortion super resolution component is enabled.

### Scenario 4: Image data with a WQHD resolution does not require frame interpolation and super-resolution processing by the discrete display chip

Specific steps are the same as those in scenario 2, except that after the frame interpolation component is disabled, the low distortion super resolution component is disabled.

It should be noted that the data processing system may be applied to a mobile phone display screen, and may also be adapted to a tablet computer, a notebook computer, an in-vehicle computer, a watch screen, or the like.

The data processing method provided in the embodiments of this application may be performed by a data processing apparatus. In the embodiments of this application, the data processing apparatus provided in the embodiments of this application is described by using an example in which the data processing apparatus performs the data processing method.

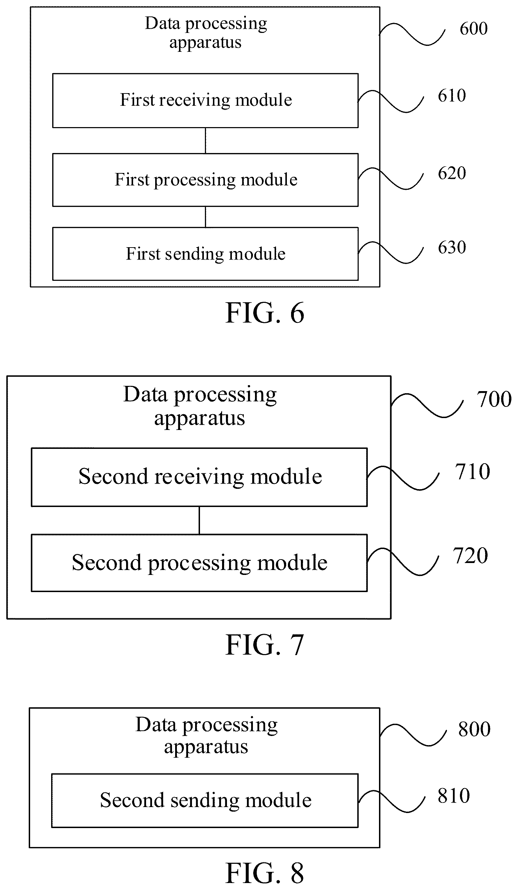

As shown in FIG. 6, a data processing apparatus 600 according to an embodiment of this application includes:
a first receiving module 610, configured to receive a first enabling instruction sent by a system on chip; and
a first processing module 620, configured to reduce a resolution of obtained first data according to the first enabling instruction, and process the first data with a reduced resolution, to obtain second data; and
a first sending module 630, configured to send the second data to a display driver integrated circuit, where
the first data is image data sent by the system on chip, the resolution of the first data is greater than or equal to a first threshold, and a resolution of the second data is less than the first threshold.

Optionally, the first processing module is further configured to:
downscale the first data by enabling a downscale component in a discrete display chip.

Optionally, the first processing module is further configured to: perform at least one of the following processing on the first data with the reduced resolution: frame interpolation; super-resolution; denoising; color enhancement; and color calibration.

Optionally, the apparatus further includes:
a third processing module, configured to communicate an input port of the discrete display chip with a display data receiving component of the discrete display chip after receiving the first enabling instruction, where the display data receiving component is connected to the downscale component; and
a third sending module, configured to send a first transmission instruction to the system on chip, where the first transmission instruction notifies the system on chip to send the first data.

Optionally, the apparatus further includes:
a third receiving module, configured to receive a first disabling instruction sent by the system on chip after receiving the first enabling instruction; and
a fourth processing module, configured to directly communicate an output port of the discrete display chip with the input port of the discrete display chip according to the first disabling instruction, where
the input port of the discrete display chip is connected to an output port of the system on chip, and the output port of the discrete display chip is connected to an input port of the display driver integrated circuit.

The data processing apparatus according to the embodiment of this application can implement all processes in the method embodiment shown in FIG. 1, and details are not described herein again to avoid repetition.

As shown in FIG. 7, a data processing apparatus 700 according to an embodiment of this application includes:
a second receiving module 710, configured to receive a second enabling instruction sent by a system on chip; and
a second processing module 720, configured to increase, according to the second enabling instruction and in a case of obtaining second data sent by a discrete display chip, a resolution of the second data, to obtain third data, where
a resolution of the third data is equal to a resolution of first data, and the first data is image data sent by the system on chip.

Optionally, the second processing module is further configured to:
upscale the second data by enabling an upscale component in a display driver integrated circuit.

Optionally, the apparatus further includes:
a fourth receiving module, configured to receive a second disabling instruction sent by the system on chip after receiving the second enabling instruction;
a fifth processing module, configured to disable the upscale component according to the second disabling instruction and send a second transmission instruction, where the second transmission instruction notifies the system on chip to send the first data; and
a fifth receiving module, configured to receive the first data transmitted by the discrete display chip.

The data processing apparatus according to the embodiment of this application can implement all processes in the method embodiment shown in FIG. 2, and details are not described herein again to avoid repetition.

As shown in FIG. 8, a data processing apparatus 800 according to an embodiment of this application includes:
a second sending module 810, configured to send a second enabling instruction to a display driver integrated circuit and send a first enabling instruction to a discrete display chip after sending the second enabling instruction, where
the first enabling instruction instructs the discrete display chip to reduce a resolution of first data sent by a system on chip and then obtain second data through processing; and the second enabling instruction instructs the display driver integrated circuit to increase a resolution of the second data to obtain third data; and
the resolution of the first data is greater than or equal to a first threshold; the resolution of the second data is less than the first threshold; and a resolution of the third data is equal to the resolution of the first data.

Optionally, the apparatus further includes:
a fourth sending module, configured to send a first disabling instruction to the discrete display chip, where
the first disabling instruction instructs the discrete display chip to directly communicate an output port of the discrete display chip with an input port of the discrete display chip.

Optionally, the apparatus further includes:
a fifth sending module, configured to send a second disabling instruction to the display driver integrated circuit, where
the second disabling instruction instructs the display driver integrated circuit to disable an upscale component.

The data processing apparatus according to the embodiment of this application can implement all processes in the method embodiment shown in FIG. 3, and details are not described herein again to avoid repetition.

An embodiment of this application further provides an electronic device, including the data processing system described above.

It should be noted that the electronic device in the embodiment of this application includes the foregoing mobile electronic device and the non-mobile electronic device.

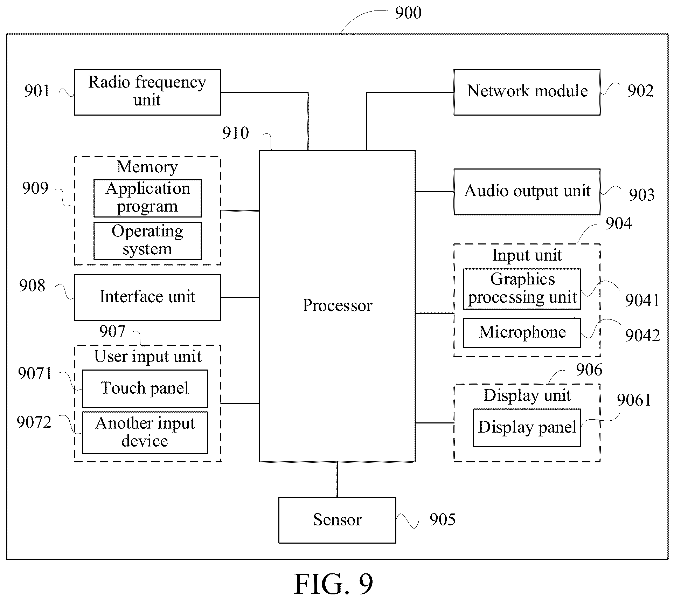

FIG. 9 is a diagram of a hardware structure of an electronic device according to an embodiment of this application.

The electronic device 900 includes, but is not limited to, components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the electronic device 900 may further include a power supply (such as a battery) for supplying power to the components. The power supply may be logically connected to the processor 910 by using a power management system, thereby implementing functions such as charging, discharging, and power consumption management by using the power management system. The structure of the electronic device shown in FIG. 9 does not constitute a limitation on the electronic device, and the electronic device may include more or fewer components than those shown in the figure, or some components are combined, or a different component arrangement is adopted. Details are not described herein again.

The electronic device 900 further includes the data processing system described above.

An SoC first sends a second enabling instruction to a DDIC, to instruct the DDIC, after second data is received, to increase a resolution of the second data to obtain third data; and then sends a first enabling instruction to a discrete display chip, to instruct the discrete display chip, after first data is received, to first reduce a resolution of the first data, then process the first data with a reduced resolution to obtain the second data, and send the second data to the DDIC. In a case of obtaining the second data, the DDIC can increase the resolution of the second data to obtain the third data.

In this way, for the first data that is sent by the SoC and whose resolution is greater than or equal to a first threshold, the discrete display chip first reduces the resolution of the first data, so that the discrete display chip can further implement image processing on the image data, compatibility between the SoC and the discrete display chip is ensured, and display quality is improved. After receiving the second data, the DDIC increases the resolution of the second data, so that the third data is restored to an original resolution and is converted into a panel driving signal, to complete display driving and achieve higher-quality display.

It should be understood that in the embodiment of this application, the input unit 904 may include a graphics processing unit (Graphics Processing Unit, GPU) 9041 and a microphone 9042, and the graphics processing unit 9041 processes image data of static pictures or videos obtained by an image capturing apparatus (such as a camera) in a video capturing mode or an image capturing mode. The display unit 906 may include a display panel 9061. The display panel 9061 may be configured in a form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (such as a volume control key or a switch key), a track ball, a mouse, and a joystick. Details are not described herein again.

The memory 909 may be configured to store a software program and various data. The memory 909 may mainly include a first storage area for storing a program or instructions and a second storage area for storing data. In the first storage area, the following may be stored: an operating system, application programs or instructions required by at least one function (for example, a sound playback function or an image playback function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 909 in the embodiment of this application includes, but is not limited to, these memories and any other memory of a suitable type.

The processor 910 may include one or more processing units; and optionally, the processor 910 integrates an application processor and a modem processor. The application processor mainly processes operations relating to an operating system, a user interface, an application program, and the like. The modem processor mainly processes a wireless communication signal, such as a baseband processor. It may be understood that the foregoing modem may not be integrated into the processor 910.

An embodiment of this application further provides a readable storage medium. The readable storage medium has a program or instructions stored therein. The program or instructions, when executed by a processor, implement the processes in the data processing method embodiments, to achieve the same technical effect. Details are not described herein again to avoid repetition.

The processor may be a processor of the electronic device in the foregoing embodiments. The readable storage medium includes a computer-readable storage medium, such as a computer Read-Only Memory (ROM), a Random Access Memory (RAM), a magnetic disk, an optical disc, or the like.

Various processes can achieve the same technical effects. Details are not described herein again to avoid repetition.

It should be understood that the system on chip mentioned in the embodiments of this application may alternatively be referred to as a system chip, a chip system, a system on chip, or the like.

An embodiment of this application provides a computer program product. The program product is stored in a storage medium, and the program product is executed by at least one processor to implement processes in the foregoing data processing method embodiments, to achieve the same technical effects. Details are not described herein again to avoid repetition.

It should be noted that in the specification, the term "comprise", "include", or any other variant thereof is intended to cover a non-exclusive inclusion, so that a process, method, article, or apparatus that includes a list of elements not only includes those elements but also includes other elements that are not expressly listed, or further includes elements inherent to such process, method, article, or apparatus. Without further limitations, the element limited by the statement "including a..." does not preclude the presence of another identical element in a process, method, article or apparatus that includes this element. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order different from the described order, and various steps may be added, omitted, or combined. In addition, features described with reference to some examples may be combined in other examples.

According to the description of the foregoing implementations, a person skilled in the art can clearly understand that the method in the foregoing embodiments may be implemented by software in combination with a necessary universal hardware platform or by hardware only. In most cases, the former is an example implementation. Based on such an understanding, the technical solutions of this application essentially or the part contributing to the conventional technology may be implemented in a form of a computer software product. The computer software product is stored in a storage medium (such as a ROM/RAM, a magnetic disk, or an optical disc) and includes several instructions for causing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from the principle of this application and the protection scope of the claims, and all such manners fall within the protection scope of this application.

## Claims

1. A data processing method, applied to a discrete display chip, wherein the method comprises:
receiving a first enabling instruction sent by a system on chip;
reducing a resolution of obtained first data according to the first enabling instruction, and processing the first data with a reduced resolution, to obtain second data; and
sending the second data to a display driver integrated circuit, wherein
the first data is image data sent by the system on chip, the resolution of the first data is greater than or equal to a first threshold, and a resolution of the second data is less than the first threshold.

2. The method according to claim 1, wherein reducing the resolution of the obtained first data comprises:
downscaling the first data by enabling a downscale component in the discrete display chip.

3. The method according to claim 1, wherein at least one of the following processing is performed on the first data with the reduced resolution:
frame interpolation; super-resolution; denoising; color enhancement; and color calibration.

4. The method according to claim 2, wherein the method further comprises:
communicating an input port of the discrete display chip with a display data receiving component of the discrete display chip after receiving the first enabling instruction, wherein the display data receiving component is connected to the downscale component; and
sending a first transmission instruction to the system on chip, wherein the first transmission instruction notifies the system on chip to send the first data.

5. The method according to claim 1, wherein the method further comprises:
receiving a first disabling instruction sent by the system on chip after receiving the first enabling instruction; and
directly communicating an output port of the discrete display chip with an input port of the discrete display chip according to the first disabling instruction, wherein
the input port of the discrete display chip is connected to an output port of the system on chip, and the output port of the discrete display chip is connected to an input port of the display driver integrated circuit.

6. A data processing method, applied to a display driver integrated circuit, wherein the method comprises:
receiving a second enabling instruction sent by a system on chip; and
increasing, according to the second enabling instruction and in a case of obtaining second data sent by a discrete display chip, a resolution of the second data, to obtain third data, wherein
a resolution of the third data is equal to a resolution of first data, and the first data is image data sent by the system on chip.

7. The method according to claim 6, wherein increasing the resolution of the second data comprises:
upscaling the second data by enabling an upscale component in the display driver integrated circuit.

8. The method according to claim 7, wherein the method further comprises:
receiving a second disabling instruction sent by the system on chip after receiving the second enabling instruction;
disabling the upscale component according to the second disabling instruction and sending a second transmission instruction, wherein the second transmission instruction notifies the system on chip to send the first data; and
receiving the first data transmitted by the discrete display chip.

9. A data processing method, applied to a system on chip, wherein the method comprises:
sending a second enabling instruction to a display driver integrated circuit; and
sending a first enabling instruction to a discrete display chip after sending the second enabling instruction, wherein
the first enabling instruction instructs the discrete display chip to reduce a resolution of first data sent by the system on chip and then obtain second data through processing; and the second enabling instruction instructs the display driver integrated circuit to increase a resolution of second data to obtain third data; and
the resolution of the first data is greater than or equal to a first threshold; the resolution of the second data is less than the first threshold; and a resolution of the third data is equal to the resolution of the first data.

10. The method according to claim 9, wherein the method further comprises:
sending a first disabling instruction to the discrete display chip, wherein
the first disabling instruction instructs the discrete display chip to directly communicate an output port of the discrete display chip with an input port of the discrete display chip.

11. The method according to claim 9, wherein the method further comprises:
sending a second disabling instruction to the display driver integrated circuit, wherein
the second disabling instruction instructs the display driver integrated circuit to disable an upscale component.

12. A data processing apparatus, comprising:
a first receiving module, configured to receive a first enabling instruction sent by a system on chip;
a first processing module, configured to reduce a resolution of obtained first data according to the first enabling instruction, and process the first data with a reduced resolution, to obtain second data; and
a first sending module, configured to send the second data to a display driver integrated circuit, wherein
the first data is image data sent by the system on chip, the resolution of the first data is greater than or equal to a first threshold, and a resolution of the second data is less than the first threshold.

13. The apparatus according to claim 12, wherein the first processing module is further configured to:
downscale the first data by enabling a downscale component in a discrete display chip.

14. The apparatus according to claim 12, wherein the first processing module is further configured to:
perform at least one of the following processing on the first data with the reduced resolution: frame interpolation; super-resolution; denoising; color enhancement; and color calibration.

15. The apparatus according to claim 13, wherein the apparatus further comprises:
a third processing module, configured to communicate an input port of the discrete display chip with a display data receiving component of the discrete display chip after receiving the first enabling instruction, wherein the display data receiving component is connected to the downscale component; and
a third sending module, configured to send a first transmission instruction to the system on chip, wherein the first transmission instruction notifies the system on chip to send the first data.

16. The apparatus according to claim 12, wherein the apparatus further comprises:
a third receiving module, configured to receive a first disabling instruction sent by the system on chip after receiving the first enabling instruction; and
a fourth processing module, configured to directly communicate an output port of a discrete display chip with an input port of the discrete display chip according to the first disabling instruction, wherein
the input port of the discrete display chip is connected to an output port of the system on chip, and the output port of the discrete display chip is connected to an input port of the display driver integrated circuit.

17. A data processing apparatus, comprising:
a second receiving module, configured to receive a second enabling instruction sent by a system on chip; and
a second processing module, configured to increase, according to the second enabling instruction and in a case of obtaining second data sent by a discrete display chip, a resolution of the second data, to obtain third data, wherein
a resolution of the third data is equal to a resolution of first data, and the first data is image data sent by the system on chip.

18. The apparatus according to claim 17, wherein the second processing module is further configured to:
upscale the second data by enabling an upscale component in a display driver integrated circuit.

19. The apparatus according to claim 18, wherein the apparatus further comprises:
a fourth receiving module, configured to receive a second disabling instruction sent by the system on chip after receiving the second enabling instruction;
a fifth processing module, configured to disable the upscale component according to the second disabling instruction and send a second transmission instruction, wherein the second transmission instruction notifies the system on chip to send the first data; and
a fifth receiving module, configured to receive the first data transmitted by the discrete display chip.

20. A data processing apparatus, comprising:
a second sending module, configured to send a second enabling instruction to a display driver integrated circuit and send a first enabling instruction to a discrete display chip after sending the second enabling instruction, wherein
the first enabling instruction instructs the discrete display chip to reduce a resolution of first data sent by a system on chip and then obtain second data through processing; the second enabling instruction instructs the display driver integrated circuit to increase a resolution of the second data to obtain third data; and
the resolution of the first data is greater than or equal to a first threshold; the resolution of the second data is less than the first threshold; and a resolution of the third data is equal to the resolution of the first data.

21. The apparatus according to claim 20, wherein the apparatus further comprises:
a fourth sending module, configured to send a first disabling instruction to the discrete display chip, wherein
the first disabling instruction instructs the discrete display chip to directly communicate an output port of the discrete display chip with an input port of the discrete display chip.

22. The apparatus according to claim 20, wherein the apparatus further comprises:
a fifth sending module, configured to send a second disabling instruction to the display driver integrated circuit, wherein
the second disabling instruction instructs the display driver integrated circuit to disable an upscale component.

23. A data processing system, comprising a discrete display chip, a display driver integrated circuit, and a system on chip, wherein
the system on chip is configured to: send a second enabling instruction to the display driver integrated circuit and send a first enabling instruction to the discrete display chip after sending the second enabling instruction;
the discrete display chip is configured to: after receiving the first enabling instruction, reduce a resolution of obtained first data according to the first enabling instruction, process the first data with a reduced resolution, to obtain second data, and send the second data to the display driver integrated circuit;
the display driver integrated circuit is configured to: after receiving the second enabling instruction, increase, according to the second enabling instruction and in a case of obtaining the second data sent by the discrete display chip, a resolution of the second data, to obtain third data; and
the first data is image data sent by the system on chip, the resolution of the first data is greater than or equal to a first threshold, the resolution of the second data is less than the first threshold, and a resolution of the third data is equal to the resolution of the first data.

24. The system according to claim 23, wherein
the display driver integrated circuit is further configured to: disable an upscale component and send a second transmission instruction to the system on chip according to a received second disabling instruction sent by the system on chip, wherein the second transmission instruction notifies the system on chip to send the first data; and
the discrete display chip is further configured to: directly communicate an output port of the discrete display chip with an input port of the discrete display chip according to a received first disabling instruction sent by the system on chip, and directly send the first data to the display driver integrated circuit through the output port of the discrete display chip in a case that the input port of the discrete display chip receives the first data.

25. The system according to claim 23, wherein the discrete display chip is further configured to: downscale the first data by enabling a downscale component in the discrete display chip.

26. The system according to claim 23, wherein the discrete display chip is further configured to: perform at least one of the following processing on the first data with the reduced resolution:
frame interpolation; super-resolution; denoising; color enhancement; and color calibration.

27. The system according to claim 23, wherein the display driver integrated circuit is further configured to: upscale the second data by enabling an upscale component in the display driver integrated circuit.

28. An electronic device, comprising the data processing system according to any one of claims 15 to 19.

29. A readable storage medium, wherein the readable storage medium has a program or instructions stored therein, and the program or the instructions are executed by a processor to implement the steps of the data processing method according to any one of claims 1 to 5, or implement the steps of the data processing method according to any one of claims 6 to 8, or implement the steps of the data processing method according to any one of claims 9 to 11.

30. A computer program product, wherein the program product is stored in a storage medium, and the program product is executed by at least one processor to implement the steps of the data processing method according to any one of claims 1 to 5, or implement the steps of the data processing method according to any one of claims 6 to 8, or implement the steps of the data processing method according to any one of claims 9 to 11.
